# FASCICULE DE BREVET EUROPEEN

(11) **EP 1 193 948 B1**
(45) Date de publication et mention de la délivrance du brevet: **05.11.2014**
(21) Numéro de dépôt: 01402226.3
(22) Date de dépôt: 27.08.2001
(51) Int. Cl.: H04L 29/06

(54) **Système de communication basé sur le protocole SOAP**
Kommunikationsystem auf basis von SOAP protokoll
Communications system based on the SOAP protocol

(30) Priorité: 31.08.2000 FR 0011320
(43) Date de publication de la demande: 03.04.2002
(73) Titulaire: Schneider Automation, 06560 Valbonne (FR)
(72) Inventeur: Stawikowski, Jean-Marie, 06600 Antibes (FR); Hardy, Christian, 83340 Le Thoronet (DE)
(74) Mandataire: Dufresne, Thierry

(56) Documents cités:
- WO-A-99/13418
- WO-A-99/63409
- D. BOX, D. EHNEBUSKE, G. KAKIVAYA ET AL.: "Simple Access Object Protocol (SOAP) version 1.1" WWW.W3.ORG, WORLD WIDE WEB CONSORTIUM., 8 mai 2000 (2000-05-08), XP002163943
- CHRISTENSEN E ET AL: "Web Sevices Description Language (WSDL) 1.0" IBM DEVELOPERWORKS - WEB ARCHITECTURE DOCUMENT SERIES, 25 septembre 2000 (2000-09-25), XP002177814 Extrait de l'Internet: <URL:http://www-4.ibm.com/software/develop er/library> [extrait le 2001-09-18]

## Description

La présente invention concerne un système de communication sur un réseau global de type Internet, Intranet ou Extranet, entre au moins un équipement d'automatisme offrant une ou plusieurs fonctions d'automatisme et au moins un appareil distant, permettant d'utiliser le protocole SOAP (Simple Object Access Protocol) à l'intérieur d'un équipement d'automatisme, grâce à au moins un service WEB et/ou un client WEB pouvant interagir avec un programme de l'équipement d'automatisme. La présente invention concerne également un procédé de communication basé sur ce système de communication ainsi qu'un équipement d'automatisme capable de mettre en oeuvre ce système et ce procédé de communication. Un tel système de communication peut s'appliquer à toute application d'automatisme appartenant au domaine des automatismes industriels, des automatismes du bâtiment ou du contrôle/commande des réseaux électriques de distribution.

Sous le terme "équipement d'automatisme", on désignera ci-après un automate programmable, une commande numérique, une station de contrôle/commande mais aussi tout équipement ou module d'automatisme possédant au moins une unité de traitement, capable de se connecter sur un réseau IP tel que défini au paragraphe suivant, et capable d'exécuter un programme pour offrir une ou plusieurs fonctions d'automatisme dans une application d'automatisme. Par exemple, on inclura dans cette définition un module métier ou un module d'entrées/sorties d'un automate programmable, un terminal de dialogue, un variateur de vitesse, etc....

Il est connu qu'un tel équipement d'automatisme puisse intégrer un serveur WEB de façon à pouvoir échanger des données relatives à cet équipement d'automatisme avec un client WEB distant, tel qu'un navigateur, connecté à un réseau de communication global. Ce réseau global est de type Internet, Intranet ou Extranet, conforme à la norme TCP/IP ou à la norme UDP/IP, et sera appelé "réseau IP" dans la suite de l'exposé. Ces fonctionnalités sont décrites notamment dans les documents WO9913418, US6061603 et US5805442. Les données relatives à l'équipement d'automatisme sont alors mises en forme et expédiées par le serveur WEB, par exemple sous forme de pages HTML ou XML. Il est également possible qu'un serveur WEB implanté dans un équipement d'automatisme puisse charger un programme, généralement appelé Applet, dans un appareil distant, lequel programme se déroule dans l'appareil distant de façon à échanger soit un serveur informatique, tel qu'un serveur d'applications ASP (Applications Service Provider), un serveur WEB, un serveur WAP, un serveur de système de gestion de bases de données (SGBD), un serveur de progiciel de gestion intégré (PGI), un serveur ERP (Enterprise Resource Planning), un serveur EAI (Enterprise application integration), un serveur de gestion électronique de documents (GED), un serveur de commerce électronique interentreprises (B-to-B) ou tout autre système informatique. Par appareil distant, on peut aussi désigner un ensemble d'appareils distants communiquant entre eux. Un appareil distant comporte au moins une unité de traitement, est capable de se connecter à au moins un équipement d'automatisme par un réseau IP et d'exécuter un programme ou un ensemble de programmes informatiques. Certains équipements d'automatisme, tels que des terminaux de dialogue, peuvent être considérés comme des appareils distants.

Le protocole SOAP est un protocole permettant d'échanger de façon simple des informations dans un environnement décentralisé. Il est basé sur le langage normalisé XML (eXtensible Markup Language) et peut être utilisé en combinaison avec plusieurs autres protocoles du WEB tels que HTTP (Hyper Text Transfer Protocol), HTTPS (ou HTTP/SSL : Hyper Text Transfer Protocol / Secure Socket Layer), SMTP (Simple Mail Transfer Protocol), FTP (File Transfer Protocol) et avec le protocole IP. Le protocole SOAP est basé sur des schémas XML et fournit un vocabulaire définissant une structure, un contenu et une syntaxe des requêtes de communication. Ce protocole est déposé au W3C (World Wide Web Consortium).

Le document WO99/63409 montre un système de communication sur réseau IP entre un équipement d'automatisme et un ou plusieurs appareils distants, dans le but de fournir aux appareils distants des fonctions de surveillance, de visualisation, de contrôle de l'équipement d'automatisme.

Il serait particulièrement intéressant, pour le concepteur d'une application dans un appareil distant utilisant des outils de développement de plus en plus répandus sur le marché pour les applications WEB, de pouvoir directement échanger des données sur un réseau IP avec un ou plusieurs équipements d'automatisme et ceci grâce au protocole SOAP. En adaptant l'équipement d'automatisme à des protocoles issus du monde informatique, un équipement d'automatisme pourrait communiquer avec une application informatique distante développée séparément avec des outils de développement du monde informatique, sans avoir à développer des passerelles ou des protocoles propriétaires, ouvrant ainsi largement les domaines des automatismes au domaine de l'Internet.

Pour cela, l'invention décrit un système de communication sur un réseau IP entre un équipement d'automatisme exécutant un programme pour fournir des fonctions d'automatisme et un ou plusieurs appareils distants exécutant un programme ou un ensemble de programmes informatiques. Le système de communication est basé sur le protocole SOAP (Simple Object Access Protocol) dans le but de fournir à l'appareil distant des fonctions de surveillance, de visualisation, de contrôle, de configuration ou de programmation de l'équipement d'automatisme, et le système de communication comporte, dans l'équipement d'automatisme, au moins un service WEB ou un client WEB qui sont capables d'interagir avec le programme de l'équipement d'automatisme, de décoder des messages reçus en provenance du réseau IP codés selon le protocole SOAP et d'encoder selon le protocole SOAP des messages à émettre sur le réseau IP.

Le système de communication peut aussi comporter un document de description de service qui décrit les capacités d'un ou plusieurs service(s) WEB implanté(s) dans un équipement d'automatisme, ce document de description de service étant accessible par un appareil distant soit à partir de ses ressources locales, soit à partir de ressources distantes identifiées par une adresse URL (Uniform Resource Locator), URI (Universal Resource Identifier) ou IP (Internet Protocol). Il peut être mémorisé dans des moyens de stockage situés dans l'équipement d'automatisme ou peut être généré dynamiquement par l'équipement d'automatisme; de plus il est conforme à un langage de description de service faisant référence au protocole SOAP ou au protocole HTTP, HTTPS et fournissant une grammaire s'appuyant sur le langage XML (eXtensible Markup Language).

Etant donné l'aspect évolutif du langage XML, il sera possible d'ajouter des éléments nouveaux en assurant une compatibilité ascendante sans déstabiliser les développements antérieurs. De plus, grâce aux documents de description de service, on obtiendra une unification d'équipements très différents, en stockant et en rendant accessible par tous des "métadonnées" qui décrivent les services qu'ils sont capables d'exposer.

D'autres caractéristiques et avantages vont apparaître dans la description détaillée qui suit en se référant à un mode de réalisation donné à titre d'exemple et représenté par les dessins annexés sur lesquels :
- la figure 1 représente un premier exemple d'un système de communication conforme à l'invention entre un équipement d'automatisme comprenant un service WEB et un appareil distant client,
- la figure 2 représente un deuxième exemple d'un système de communication entre un équipement d'automatisme comprenant un client WEB et un appareil distant serveur,
- la figure 3 représente un exemple dans lequel un équipement d'automatisme, communiquant avec un appareil distant à la fois client et serveur, comporte un client WEB et un service WEB séparés,
- la figure 4 reprend la figure 3 avec un équipement d'automatisme comportant un client WEB inclus dans un service WEB,
- la figure 5 représente un exemple de communication dans lequel un équipement d'automatisme fournit un document de description de service à un appareil distant de façon à pouvoir communiquer avec lui,
- la figure 6 schématise les différentes étapes d'un procédé mettant en oeuvre le système de communication selon l'invention avec notamment un document de description de service mémorisé dans un appareil distant différent de l'équipement d'automatisme,
- la figure 7 montre une variante du procédé de communication de la figure 6.

Un service WEB est une ressource accessible sur le WEB, au moyen d'une interface réseau, qui accepte des requêtes et renvoie des réponses à ces requêtes. Cette ressource est décrite de façon formelle par une interface logicielle contenue dans un document de description de service. Une implémentation d'une telle interface logicielle dans un équipement d'automatisme est appelée "service WEB" dans le présent exposé. Un client WEB est une ressource pouvant accéder au WEB, au moyen d'une interface réseau, qui envoie des requêtes et reçoit des réponses à ces requêtes.

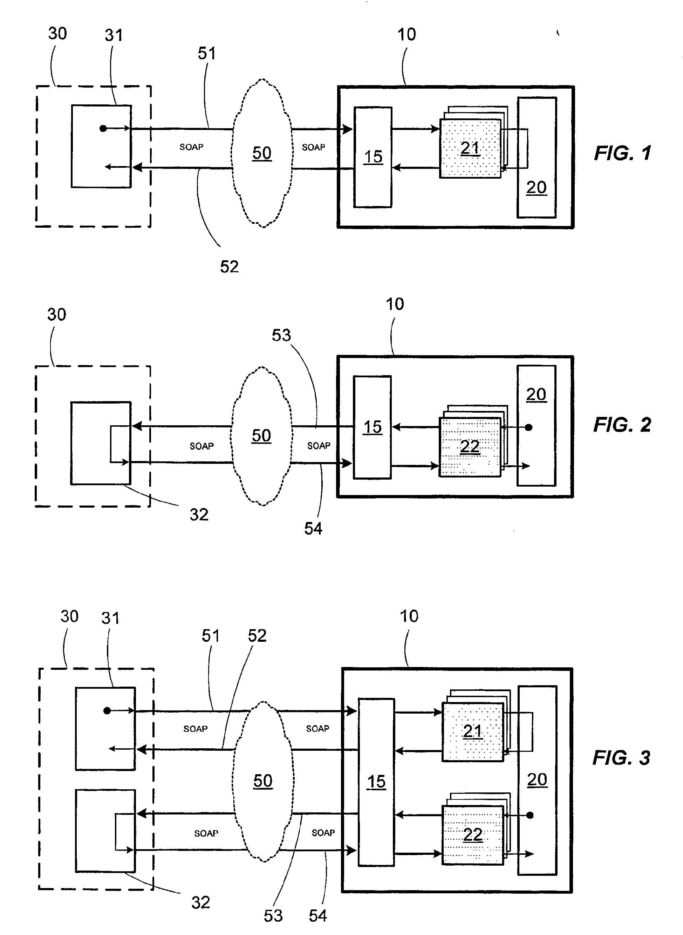

En référence aux figures 1 et 2, un équipement d'automatisme 10 est connecté par un réseau IP 50 à un appareil distant 30. L'équipement d'automatisme 10 comporte au moins une unité de traitement capable d'exécuter un programme 20 permettant d'offrir une ou plusieurs fonctions d'automatisme à une application d'automatisme. Ce programme 20 peut être par exemple un programme application ou utilisateur permettant de faire du contrôle/commande d'une application d'automatisme ou directement le système d'exploitation de l'équipement d'automatisme 10. L'équipement d'automatisme 10 comporte au moins un service WEB 21 et/ou un client WEB 22 capable d'interagir avec le programme 20 de l'équipement d'automatisme. Un appareil distant 30 comporte au moins une unité de traitement capable d'exécuter un programme ou un ensemble de programmes informatiques pouvant intégrer une pluralité d'applications WEB client 31 et/ou serveur 32.

La figure 1 montre un équipement d'automatisme 10 communiquant avec un appareil distant 30 sur un réseau IP 50. L'appareil distant 30 exécute une application client WEB 31 capable d'émettre sur le réseau IP 50 des requêtes 51 conformes au protocole SOAP. Une requête SOAP 51 est reçue par un service WEB 21 de l'équipement d'automatisme 10 qui la décode, l'exécute et renvoie une réponse 52 en la codant selon le protocole SOAP. L'application client 31 est capable de recevoir des réponses SOAP 52.

De façon symétrique, la figure 2 montre un équipement d'automatisme 10 communiquant avec un appareil distant 30 sur un réseau IP 50. L'équipement d'automatisme 10 comprend un client WEB 22 capable d'émettre sur le réseau IP 50 des requêtes 53 codées selon le protocole SOAP. Une requête SOAP 53 est reçue par une application serveur WEB 32 de l'appareil distant 30 qui la décode, l'exécute et renvoie une réponse 54 en la codant selon le protocole SOAP. Le client WEB 22 est capable de recevoir et de décoder des réponses SOAP 54.

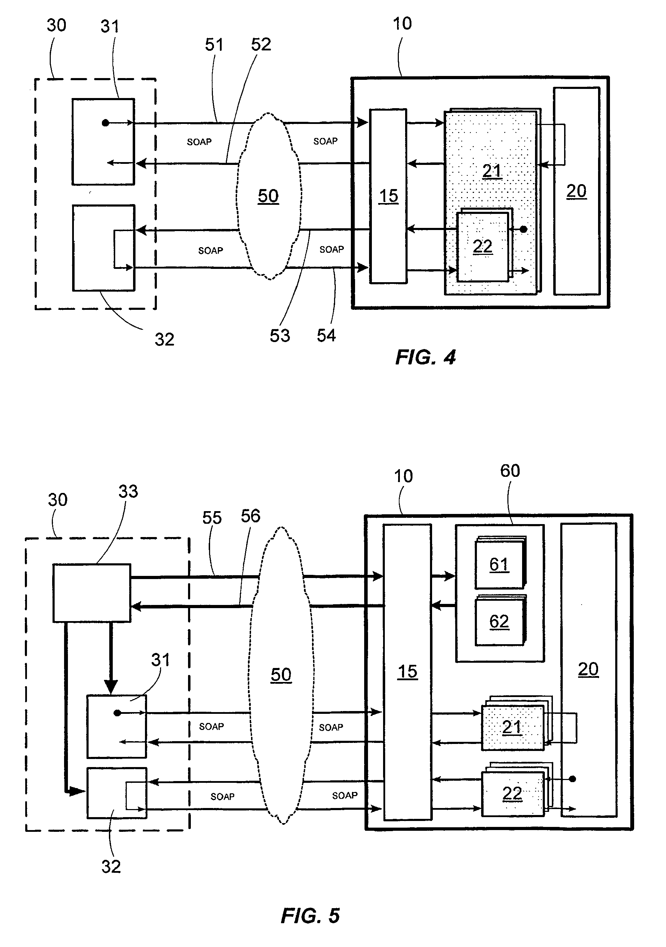

La figure 3 montre un équipement d'automatisme 10 comprenant à la fois un service WEB 21 et un client WEB 22 séparés, qui communiquent respectivement avec une application client WEB 31 et une application serveur WEB 32 d'un appareil distant 30. Les applications client WEB 31 et serveur WEB 32 peuvent appartenir ou non à un même appareil distant 30 connecté au réseau IP 50 et comportant, par exemple, une application ERP (Enterprise Resource Planning). Dans la variante schématisée en figure 4, l'équipement d'automatisme 10 comporte un client WEB 22 qui est inclus dans un service WEB 21. Par exemple, ce service WEB 21 peut intégrer une fonctionnalité de souscription 51,52 à partir de laquelle il est possible d'envoyer, à l'initiative du service

WEB 21 ou à l'initiative de l'équipement d'automatisme 10, une notification 53,54 vers au moins un appareil distant 30, pour informer celui-ci d'événements ou d'états concernant l'équipement d'automatisme 10.

L'exemple ci-dessous montre une requête 51 conforme au protocole SOAP, émise par une application client WEB 31, pour aller lire une information "*voltage*" sur un service WEB 21 d'un équipement d'automatisme 10 nommé : "*http:*//*equipement-automatisme-1.schneider-electric.com*/*service-1*", suivi d'une réponse 52 conforme au protocole SOAP, émise par le service WEB 21 de l'équipement d'automatisme 10, retournant la valeur "2*20*" pour l'application WEB client 31.

Message SOAP incorporé dans la requête HTTP 51 :

```
 POST /service-1 HTTP/1.1
 Host: equipement-automatisme-1.schneider-electric.com
 Content-Type: text/xml; charset="utf-8"
 Content-Length: nnnn
 SOAPAction: "Some-URI"
 <SOAP-ENV:Envelope
  xmlns:SOAP-ENV="http://schemas.xmlsoap.org/soap/envelope/"
  SOAP-ENV:encodingStyle="http://schemas.xmlsoap.org/soap/encoding/">
   <SOAP-ENV:Body>
     <m:Read xmlns:m="http://www.w3.org/1998/Math/MathML">
          <Variable>Voltage</Variable>
     </m:Read>
   </SOAP-ENV:Body>
  </SOAP-ENV:Envelope>
```

Message SOAP incorporé dans la réponse HTTP 52 :

```
 HTTP/1.1 200 OK
 Content-Type: text/xml; charset="utf-8"
 Content-Length: nnnn
 <SOAP-ENV:Envelope
  xmlns:SOAP-ENV="http://schemas.xmlsoap.org/soap/envelope/"
  SOAP-ENV:encodingStyle="http://schemas.xmlsoap.org/soap/encoding/">
   <SOAP-ENV:Body>
     <m:ReadResponse xmlns:m="http://www.w3.org/1998/Math/MathML">
          <Data>220</Data>
     </m:ReadResponse>
   </SOAP-ENV:Body>
  </SOAP-ENV:Envelope>
```

Pour communiquer sur le réseau IP 50, l'équipement d'automatisme 10 comporte une interface réseau WEB 15 de type HTTP, HTTPS, SMTP, FTP, TCP/IP ou UDP/IP. Cette interface réseau 15 est capable de faire l'acheminement de messages 51,54 provenant du réseau IP 50 vers un client WEB 22 ou vers un service WEB 21 identifié par une adresse URL, URI ou IP, et de faire l'acheminement de messages 52,53 provenant d'un service WEB 21 ou d'un client WEB 22 de l'équipement d'automatisme 10 vers une adresse URL, URI ou IP sur le réseau IP 50.

Selon un autre mode de réalisation, il est également possible d'envisager qu'une application client WEB 31 d'un appareil distant 30 envoie sur le réseau IP 50 une requête 51 de type HTTP, HTTPS et non codée selon le protocole SOAP, à destination d'un service WEB 21 d'un équipement d'automatisme 10 identifié par une adresse URL, URI ou IP et que le service WEB 21 réponde sur le réseau IP 50 à l'aide d'une réponse 52 codée selon le protocole SOAP vers l'application client WEB 31. Une telle requête 51 HTTP, HTTPS peut, par exemple, être une requête "GET" ou "POST".

Les données transmises dans des requêtes 51,53 et des réponses 52,54, codées selon le protocole SOAP, peuvent représenter l'implémentation de protocoles de communication habituellement rencontrés entre un équipement informatique et un équipement d'automatisme. Parmi ces protocoles habituels, on retrouve notamment les protocoles MMS, MODBUS et UNI-TE.

Le système de communication peut avantageusement s'appuyer sur un document de description de service 61 qui décrit les capacités d'un ou plusieurs services WEB 21 d'un équipement d'automatisme 10, c'est-à-dire qui décrit les services WEB qu'un équipement d'automatisme 10 est en mesure de fournir ou de proposer. Ainsi, grâce à un tel document 61, un appareil distant 30 quelconque est en mesure de savoir en permanence quels sont les services disponibles dans un équipement d'automatisme 10. Un document de description de service 61 peut aussi contenir la description de plusieurs services WEB 21 standard, correspondant par exemple à des services implantés systématiquement dans toute une gamme bien identifiée d'équipements d'automatisme. De même, il peut aussi contenir un service WEB 21 particulier disponible sur toute une liste d'équipements d'automatisme distincts.

Un document de description de service 61 spécifie pour chaque service un ensemble de requêtes (nom de la requête, nature et nom des paramètres, attributs de la requête) ainsi que le ou les protocole(s) devant être utilisé(s) pour invoquer la requête auprès de l'équipement d'automatisme 10. Le cas échéant, ce ou ces protocoles peuvent être sous-entendus. Le document de description de service 61 est conforme à un langage de description de service faisant référence au protocole SOAP ou au protocole HTTP, HTTPS et fournissant une grammaire s'appuyant sur le langage XML ou XML schémas définis par le W3C. Selon un mode de réalisation préféré, il est conforme au langage de description de service SDL (Service Description Language) spécifié par Microsoft Corporation, au langage de description de service SCL (SOAP Contract Language) spécifié par Microsoft Corporation, au langage de description de service NASSL (Network Accessible Service Specification Language) spécifié par IBM Corporation ou au langage WSDL (Web Services Description Language) déposé au Consortium W3C. Un document de service 61 peut contenir une ou plusieurs adresses URL, URI ou IP pointant sur un ou plusieurs services WEB 21.

Un service WEB 21 pourrait aussi être décrit par plusieurs documents de description de service 61 conformes chacun à un langage de description de service différent, de façon à ce qu'un même équipement d'automatisme 10 puisse être accessible à différentes applications informatiques. Par ailleurs, un document de description de service 61 peut se présenter sous forme compressée dans un format de compression standard de fichiers ou de documents, tel que ZIP ou GZIP.

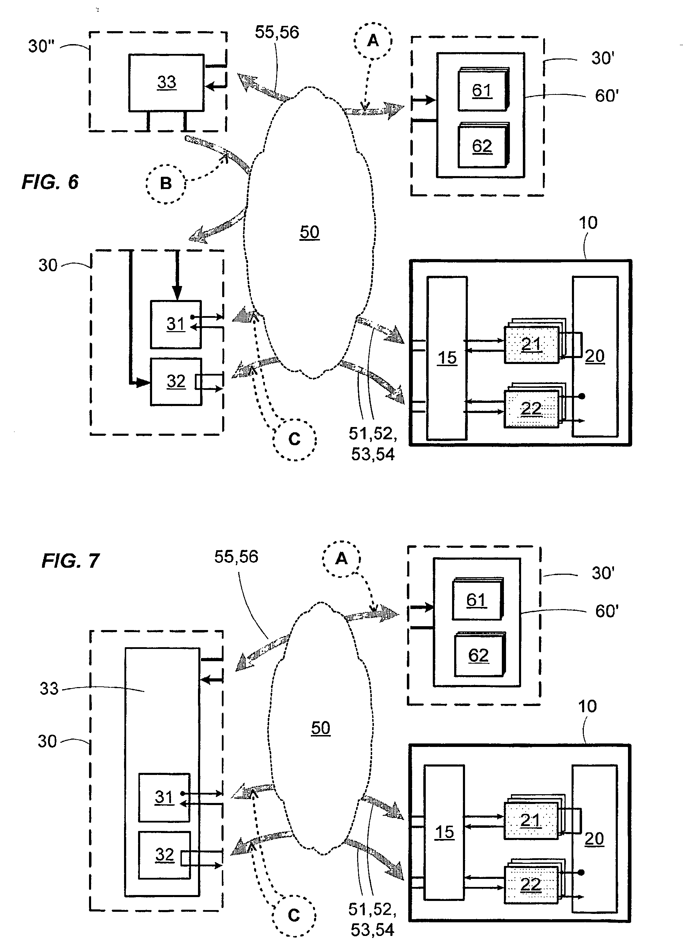

En référence à la figure 5, un document de description de service 61 est mémorisé dans des moyens de stockage 60 d'un équipement d'automatisme 10, alors que, dans la figure 6, il est localisé dans des moyens de stockage 60' d'un appareil distant 30'. Ces moyens de stockage 60,60' peuvent indifféremment être un système de fichiers sur disque dur, CDROM, DVD, disquette, mémoire ou tout autre moyen de mémorisation. Un document de description de service 61 est donc accessible par un appareil distant 30 à partir de ressources distantes identifiées par une adresse URL, URI ou IP, lorsqu'il se trouve dans un équipement d'automatisme 10 ou dans un autre appareil distant 30'. Mais on pourrait envisager également qu'un document de description de service 61 soit accessible par un appareil distant 30 directement à partir de ses propres ressources locales (par exemple grâce à un lecteur de CD-ROM).

Dans la figure 5, un appareil distant 30 comporte une application informatique 33, telle qu'un outil de développement logiciel ou un navigateur, qui est capable d'émettre sur le réseau IP 50 une requête de lecture 55 conforme à un des protocoles du WEB (par exemple une requête HTTP), pour demander un document de description de service 61 décrivant les services disponibles dans un équipement d'automatisme 10. Ce document est ensuite renvoyé sur le réseau IP 50 à l'application informatique 33 dans une réponse 56. A partir de ces éléments, l'application informatique 33 peut :
- visualiser le contenu du document de description de service 61 pour qu'un concepteur puisse développer une application client WEB 31 et/ou application serveur WEB 32 qui sera capable de communiquer respectivement avec un service WEB 21 et/ou un client WEB 22 de l'équipement d'automatisme 10, grâce au protocole SOAP,
- utiliser le contenu du document de description de service 61 pour construire et assembler tout ou partie d'une application client WEB 31 et/ou d'une application serveur WEB 32, de manière à décharger le développeur du client ou du serveur des aspects routiniers du développement d'application (construction des requêtes, transcodage des données, gestion des erreurs, etc.),
- dans le cas où elle est construite pour cela, directement émettre des requêtes SOAP vers un service WEB 21 de l'équipement d'automatisme 10 à travers une application client WEB 31 intégrée, et/ou directement recevoir d'un client WEB 22 de l'équipement d'automatisme 10 des requêtes SOAP via une application serveur WEB 32, comme indiqué en figure 7.

Un des avantages de la présente invention réside aussi dans le fait qu'un document de description de service 61 décrivant les services d'un équipement d'automatisme 10 peut être construit de différentes manières. Il peut être mémorisé dans des moyens de stockage 60 de l'équipement d'automatisme 10 ou dans des moyens de stockage 60' d'un appareil distant 30', mais il peut aussi être généré dynamiquement lorsqu'une application informatique 33 d'un appareil distant 30 émet une requête 55 pour accéder aux services disponibles dans l'équipement d'automatisme 10. Cette fonctionnalité permet donc de faire évoluer le document de description de service 61, par exemple quand la configuration de l'équipement d'automatisme 10 est modifiée (connexion ou déconnexion d'un module dans un automate programmable 10). De plus, un équipement d'automatisme 10 peut souhaiter exposer ou cacher certains services WEB en fonction de son état ou en fonction de l'appareil distant 30 qui veut communiquer avec lui.

Pour cela, un équipement d'automatisme 10 peut comporter un générateur 62 qui est un programme capable de construire dynamiquement un document de description de service 61. De façon préférentielle, cette construction dynamique est réalisée lorsqu'un appareil distant 30 demande à accéder au document de description de service 61 de l'équipement d'automatisme 10. Dans ce cas, le document de description de service 61 n'a pas besoin d'être mémorisé puisqu'il est élaboré dynamiquement à chaque requête 55 émise par une application informatique 33 vers le générateur 62. Cependant, dans certains cas, on pourrait aussi envisager une construction dynamique du document 61 initiée à la demande de l'équipement d'automatisme 10. De plus, on peut aussi envisager une solution mixte dans laquelle un générateur 62 serait capable de personnaliser dynamiquement un document de description de service 61, en s'appuyant sur un document standard déjà mémorisé pour une famille d'équipements, par exemple.

Pour obtenir un document de description de service 61 dans une réponse 56, une requête de lecture 55 contient donc une adresse URL, URI ou IP qui pointe soit sur un générateur 62 capable de construire dynamiquement le document de description de service 61 soit directement sur le document de description de service 61.

Le générateur 62 peut indifféremment être mémorisé dans des moyens de stockage 60 de l'équipement d'automatisme 10, comme indiqué figure 5, ou dans des moyens de stockage 60' d'un appareil distant 30', comme indiqué figure 6. Par ailleurs, la figure 6 montre une application informatique 33 qui est exécutée dans un autre appareil distant 30" différent de l'appareil distant 30 qui contient les applications WEB 31,32. Les communications entre les appareils distants 30,30',30" se font sur le réseau IP 50.

Un procédé de communication sur un réseau IP 50 entre un équipement d'automatisme 10 exécutant un programme 20 pour fournir des fonctions d'automatisme et un appareil distant 30 exécutant un programme ou un ensemble de programmes informatiques est décrit dans la figure 6. Ce procédé de communication s'appuie sur un système de communication tel que décrit précédemment basé sur le protocole SOAP (Simple Object Access Protocol) dans le but de fournir à l'appareil distant 30 des fonctions de surveillance, de visualisation, de contrôle, de configuration ou de programmation de l'équipement d'automatisme 10. Il comporte les étapes suivantes :
- Une étape A de découverte de service dans laquelle une application informatique 33, s'exécutant dans l'appareil distant 30 ou dans un autre appareil distant 30", émet une requête 55 de lecture sur le réseau IP 50 pour recevoir, dans une réponse 56, un document de description de service 61. La requête 55 contient une adresse URL, URI ou IP qui pointe soit sur un document de description de service 61 déjà mémorisé dans l'équipement d'automatisme 10 ou dans un appareil distant 30', soit sur un générateur 62 qui construit alors dynamiquement un document de description de service 61 pour le renvoyer dans la réponse 56.
- Une étape B de développement dans laquelle, grâce au document de description de service 61, il est possible de développer manuellement ou automatiquement, à partir de l'application informatique 33, une application client WEB 31 et/ou une application serveur WEB 32 dans l'appareil distant 30 de manière à communiquer respectivement avec un service WEB 21 et/ou un client WEB 22 de l'équipement d'automatisme 10, grâce au protocole SOAP,
- Une étape C de communication entre une application client WEB 31 et/ou une application serveur WEB 32 de l'appareil distant 30 et un service WEB 21 et/ou un client WEB 22 de l'équipement d'automatisme 10, au moyen de requêtes 51,53 et de réponses 52,54 conformes au protocole SOAP.

Selon une variante représentée en figure 7, l'application informatique 33, qui dans ce cas peut être un navigateur par exemple, est structurée pour intégrer en elle-même une application client WEB 31 et/ou application serveur WEB 32. L'étape B du procédé n'est alors pas nécessaire puisque l'application informatique 33 peut directement émettre des requêtes SOAP vers un service WEB 21 et/ou un client WEB 22 de l'équipement d'automatisme 10, dès qu'elle est en possession du document de description de service 61, sans avoir besoin de développement. Le procédé de communication comporte alors une étape A de découverte de service puis directement une étape C de communication.

Il est bien entendu que l'on peut, sans sortir du cadre de l'invention, imaginer d'autres variantes et perfectionnements de détail et de même envisager l'emploi de moyens équivalents.

## Revendications

1. Système de communication comprenant un équipement d'automatisme (10) comportant au moins une unité de traitement capable d'exécuter un programme (20) pour fournir des fonctions d'automatisme, le système de communication permettant une communication sur un réseau IP (50) entre l'équipement d'automatisme (10) et un ou plusieurs appareils distants (30) exécutant un programme ou un ensemble de programmes informatiques,
• le système de communication étant basé sur le protocole SOAP (Simple Object Access Protocol) dans le but de fournir à l'appareil distant (30) des fonctions de surveillance, de visualisation, de contrôle, de configuration ou de programmation de l'équipement d'automatisme (10),
• l'équipement d'automatisme (10) comportant au moins un service WEB (21) qui est capable :
- d'interagir avec le programme (20) de l'équipement d'automatisme (10),
- de recevoir et décoder des requêtes reçues (51) via le réseau IP (50) et codées selon le protocole SOAP, venant d'au moins une application WEB client (31) contenue dans un appareil distant (30)
- d'encoder selon le protocole SOAP et d'émettre des réponses (52) sur le réseau IP (50) vers l'application WEB client (31) de l'appareil distant (30),
• le système de communication comprenant un document de description de service (61) décrivant les capacités d'un ou plusieurs services WEB (21) implantés dans l'équipement d'automatisme (10), le document de description de service (61) étant accessible pour un appareil distant (30) à partir de ressources identifiées par une adresse URL, URI ou IP,
• l'équipement d'automatisme (10) comprenant au moins un client WEB (22) capable d'interagir avec le programme (20) de l'équipement d'automatisme (10) et susceptible d'émettre sur le réseau IP (50) des requêtes (53) codées selon le protocole SOAP vers au moins une application WEB serveur (32) contenue dans un appareil distant (30), et de recevoir du réseau IP (50) et décoder des réponses (54) codées selon le protocole SOAP venant de l'application WEB serveur (32) de l'appareil distant (30),
**caractérisé par le fait que** l'équipement d'automatisme (10) comporte un générateur (62) qui est capable de construire dynamiquement le document de description de service (61), lorsqu'un appareil distant (30) émet une requête de lecture (55) pour accéder aux services disponibles dans l'équipement d'automatisme (10).

2. Système de communication selon la revendication 1, **caractérisé par le fait que** le document de description de service (61) est conforme à un langage de description de service faisant référence au protocole SOAP ou au protocole HTTP, HTTPS et fournissant une grammaire s'appuyant sur le langage XML (eXtensible Markup Language).

3. Système de communication selon la revendication 2, **caractérisé par le fait que** le document de description de service (61) peut contenir une ou plusieurs adresses URL, URI ou IP d'un ou plusieurs services WEB (21).

4. Système de communication selon la revendication 2, **caractérisé par le fait que** le document de description de service (61) est conforme au langage de description de service SDL (Service Description Language).

5. Système de communication selon la revendication 2, **caractérisé par le fait que** le document de description de service (61) est conforme au langage de description de service SCL (SOAP Contract Language).

6. Système de communication selon la revendication 2, **caractérisé par le fait que** le document de description de service (61) est conforme au langage de description de service NASSL (Network Accessible Service Specification Language).

7. Système de communication selon la revendication 2, **caractérisé par le fait que** le document de description de service (61) est conforme au langage de description de service WSDL (Web Services Description Language).

8. Système de communication selon la revendication 2, **caractérisé par le fait que** plusieurs documents de description de service (61) conformes à différents langages de description de service peuvent décrire les capacités d'un même service WEB (21).

9. Système de communication selon la revendication 2, **caractérisé par le fait que** le document de description de service (61) est compressé dans un format de compression standard de fichiers ou de documents.

10. Système de communication selon la revendication 2, **caractérisé par le fait que** le générateur (62) d'un document de description de service (61) d'un équipement d'automatisme (10) est accessible, pour un appareil distant (30,30"), par une adresse URL, URI ou IP.

11. Système de communication selon la revendication 2, **caractérisé par le fait que** le générateur (62) d'un document de description de service (61) d'un équipement d'automatisme (10) est mémorisé dans des moyens de stockage (60) situés dans l'équipement d'automatisme (10).

## Patentansprüche

1. Kommunikationssystem, das ein Automatisierungsgerät (10) enthält, welches mindestens eine Verarbeitungseinheit aufweist, die ein Programm (20) ausführen kann, um Automatisierungsfunktionen zu liefern, wobei das Kommunikationssystem eine Kommunikation in einem IP-Netzwerk (50) zwischen dem Automatisierungsgerät (10) und einem oder mehreren fernen Geräten (30) erlaubt, die ein Informatikprogramm oder eine Einheit von Informatikprogrammen ausführen,
• wobei das Kommunikationssystem auf dem SOAP-Protokoll (Simple Object Access Protocol) basiert, um dem fernen Gerät (30) Überwachungs-, Anzeige-, Kontroll-, Konfigurations- oder Programmierungsfunktionen des Automatisierungsgeräts (10) zu liefern,
• wobei das Automatisierungsgerät (10) mindestens einen Webdienst (21) aufweist, der fähig ist:
- mit dem Programm (20) des Automatisierungsgeräts (10) zu interagieren,
- über das IP-Netzwerk (50) empfangene und gemäß dem SOAP-Protokoll codierte Anforderungen (51), die von mindestens einer in einem fernen Gerät (30) enthaltenen Client-Webanwendung (31) kommen, zu empfangen und zu decodieren,
- Antworten (52) gemäß dem SOAP-Protokoll zu codieren und im IP-Netzwerk (50) zur Client-Webanwendung (31) des fernen Geräts (30) zu senden,
• wobei das Kommunikationssystem ein Dienstbeschreibungsdokument (61) enthält, das die Fähigkeiten eines oder mehrerer Webdienste (21) beschreibt, die im Automatisierungsgerät (10) installiert sind, wobei das Dienstbeschreibungsdokument (61) für ein fernes Gerät (30) ausgehend von durch eine URL-, URI- oder IP-Adresse identifizierten Ressourcen zugänglich ist,
• wobei das Automatisierungsgerät (10) mindestens einen Webclient (22) enthält, der mit dem Programm (20) des Automatisierungsgeräts (10) interagieren und im IP-Netzwerk (50) gemäß dem SOAP-Protokoll codierte Anforderungen (53) an mindestens eine in einem fernen Gerät (30) enthaltene Server-Webanwendung (32) senden und vom IP-Netzwerk (50) von der Server-Webanwendung (32) des fernen Geräts (30) kommende, gemäß dem SOAP-Protokoll codierte Antworten (54) empfangen und decodieren kann,
**dadurch gekennzeichnet, dass** das Automatisierungsgerät (10) einen Generator (62) aufweist, der das Dienstbeschreibungsdokument (61) dynamisch konstruieren kann, wenn ein fernes Gerät (30) eine Leseanforderung (55) sendet, um auf die im Automatisierungsgerät (10) verfügbaren Dienste zuzugreifen.

2. Kommunikationssystem nach Anspruch 1, **dadurch gekennzeichnet, dass** das Dienstbeschreibungsdokument (61) einer Dienstbeschreibungssprache entspricht, die sich auf das SOAP-Protokoll oder das HTTP-, HTTPSbezieht, und eine Grammatik liefert, die sich auf die XML-Sprache (eXtensible Markup Language) stützt.

3. Kommunikationssystem nach Anspruch 2, **dadurch gekennzeichnet, dass** das Dienstbeschreibungsdokument (61) eine oder mehrere URL-, URI- oder IP-Adressen eines oder mehrerer Webdienste (21) enthalten kann.

4. Kommunikationssystem nach Anspruch 2, **dadurch gekennzeichnet, dass** das Dienstbeschreibungsdokument (61) der Dienstbeschreibungssprache SDL (Service Description Language) entspricht.

5. Kommunikationssystem nach Anspruch 2, **dadurch gekennzeichnet, dass** das Dienstbeschreibungsdokument (61) der Dienstbeschreibungssprache SCL (SOAP Contract Language) entspricht.

6. Kommunikationssystem nach Anspruch 2, **dadurch gekennzeichnet, dass** das Dienstbeschreibungsdokument (61) der Dienstbeschreibungssprache NASSL (Network Accessible Service Specification Language) entspricht.

7. Kommunikationssystem nach Anspruch 2, **dadurch gekennzeichnet, dass** das Dienstbeschreibungsdokument (61) der Dienstbeschreibungssprache WSDL (Web Services Description Language) entspricht.

8. Kommunikationssystem nach Anspruch 2, **dadurch gekennzeichnet, dass** mehrere Dienstbeschreibungsdokumente (61) gemäß verschiedenen Dienstbeschreibungssprachen die Fähigkeiten des gleichen Webdiensts (21) beschreiben können.

9. Kommunikationssystem nach Anspruch 2, **dadurch gekennzeichnet, dass** das Dienstbeschreibungsdokument (61) in ein Standard-Komprimierungsformat von Dateien oder Dokumenten komprimiert ist.

10. Kommunikationssystem nach Anspruch 2, **dadurch gekennzeichnet, dass** der Generator (62) eines Dienstbeschreibungsdokuments (61) eines Automatisierungsgeräts (10) für ein fernes Gerät (30, 30") über eine URL-, URI- oder IP-Adresse zugänglich ist.

11. Kommunikationssystem nach Anspruch 2, **dadurch gekennzeichnet, dass** der Generator (62) eines Dienstbeschreibungsdokuments (61) eines Automatisierungsgeräts (10) in im Automatisierungsgerät (10) befindlichen Speichereinrichtungen (60) gespeichert wird.

## Claims

1. A communication system comprising an automation equipment (10) comprising at least one processing unit capable of running a program (20) to provide automation functions, the communication system allowing communication on an IP network (50) between the automation equipment (10) and one or more remote devices (30) running a computer program or group of computer programs,
• the communications system being based on the Simple Object Access Protocol (SOAP) for the purpose of providing the remote device (30) with supervision, display, control, configuration or programming functions of the automation equipment (10),
• the automation equipment (10) comprising at least one WEB service (21) which is capable of
- interacting with the program (20) of the automation equipment (10),
- receiving and decoding requests (51) received from the IP network (50) and encoded according to the SOAP protocol, coming from at least one WEB client application (31) contained in a remote device (30),
- encoding according to the SOAP protocol and sending on the IP network (50) responses (52) to the WEB client application (31) of the remote device (30).
• the communication system comprising a service description document (61) describing the capacities of one or more WEB services (21) implanted in the automation equipment (10), this service description document (61) being accessible for a remote device (30) from resources identified by a URL, URI or IP address,
• the automation equipment (10) comprising at least one WEB client (22) able to interact with the program (20) of the automation equipment (10) and to send on the IP network (50) requests (53) that are coded according to the SOAP protocol to at least one WEB server application (32) included in a remote device (30), and to receive from the IP network (50) and encode responses (54) coded according to the SOAP protocol coming from the WEB server application (32) of the remote device (30).
**characterized in that** the automation equipment (10) comprises a generator (62) that is capable of constructing a service description document (61) dynamically, when a remote device (30) sends a read request (55) to access the services available in the automation equipment (10).

2. A communication system according to claim 1, **characterised in that** the service description document (61) complies with a service description language referring to the SOAP protocol or to the HTTP, HTTPS protocol and providing a grammar based on the extensible Markup Language (XML).

3. A communication system according to claim 2, **characterised in that** the service description document (61) may contain one or more URL, URI or IP addresses of one or more WEB services (21).

4. A communication system according to claim 2, **characterised in that** the service description document (61) complies with the Service Description Language (SDL).

5. A communication system according to claim 2, **characterised in that** the service description document (61) complies with the SOAP Contract Language (SCL).

6. A communication system according to claim 2, **characterised in that** the service description document (61) complies with the Network Accessible Service Specification Language (NASSL).

7. A communication system according to claim 2, **characterised in that** the service description document (61) complies with the Web Services Description Language (WSDL).

8. A communication system according to claim 2, **characterised in that** several service description documents (61) complying with different service description languages can describe the capacities of a same WEB service (21).

9. A communication system according to claim 2, **characterised in that** the service description document (61) is compressed in a standard compression format for files and documents.

10. A communication system according to claim 2, **characterised in that** the generator (62) of a service description document (61) of an automation equipment (10) is accessible, for a remote device (30, 30"), via a URL, URI or IP address.

11. A communication system according to claim 2, **characterised in that** the generator (62) of a service description document (61) of an automation equipment (10) is stored in storage means (60) located in the automation equipment (10).
